# EUROPÄISCHE PATENTANMELDUNG

(11) **EP 1 020 342 A2**
(43) Veröffentlichungstag der Anmeldung: **19.07.2000**
(21) Anmeldenummer: 99122371.0
(22) Anmeldetag: 10.11.1999
(51) Int. Cl.: B62D 1/185, B62D 5/06

(54) **Lenksystem mit axial verstellbarem Lenkrad**

(30) Priorität: 15.01.1999 DE 19901300
(71) Anmelder: DaimlerChrysler AG, 70567 Stuttgart (DE)
(72) Erfinder: Bohner, Hubert, 71032 Böblingen (DE); Schuliers, Wolfgang, 21244 Buchholz (DE)

(57) **Zusammenfassung**

Die Erfindung bezieht sich auf ein Lenksystem, bei dem im Normalfall ein Lenkhandrad (9) und gelenkte Fahrzeugräder (1) lediglich wirkungsmäßig über eine Regelstrecke miteinander verbunden sind, wobei das Lenkhandrad (9) einen Lenkwinkel-Sollwertgeber (21) betätigt und zusammen mit den gelenkten Fahrzeugrädern (1) ein Lenkwinkel-Istwertgeber (20) verstellt wird, so daß die Regelstrecke ein motorisches Lenkstellaggregat (5) entsprechend einem Soll-Istwert-Vergleich des Lenkwinkels unter Lenkverstellung der gelenkten Fahrzeugräder (1) betätigen kann. Die Besonderheit der Erfindung liegt in einer axialen Verstellbarkeit des Lenkhandrades (9), wobei durch eine stabile Lagerung Schwingungen des Lenkhandrades (9) und davon ausgehende Rückwirkungen auf den Lenkwinkel-Sollwertgeber (21) vermieden werden.

## Beschreibung

Die Erfindung betrifft ein für Kraftfahrzeuge vorgesehenes Lenksystem mit einem fahrerseitig betätigbaren Lenkhandrad, einem Lenkstellaggregat zur motorischen Lenkverstellung gelenkter Fahrzeugräder, einem vom Lenkhandrad betätigten Lenkwinkel-Sollwertgeber, einem mit den gelenkten Fahrzeugrädern betätigten Lenkwinkel-Istwertgeber, einer Regelstrecke, die das Lenkstellaggregat in Abhängigkeit von einem Soll-Istwert-Vergleich des Lenkwinkels betätigt, einem Handkraftsteller, der in Korrelation zu Kräften, die zwischen den gelenkten Fahrzeugrädern und dem Lenkstellaggregat auftreten, an der Lenkhandhabe eine Rückwirkungskraft sowie einen mit Lenkwinkeländerungen der gelenkten Fahrzeugräder korrelierten Stellhub der Lenkhandhabe bewirkt.

Derzeit werden Lenksysteme der vorgenannten Art entwickelt. Dabei wird das Konzept "Steer by wire" verwirklicht, d.h. im Gegensatz zu herkömmlichen Lenksystemen ist bei normalem Betrieb keine Zwangskopplung zwischen Lenkhandhabe bzw. Lenkhandrad und gelenkten Fahrzeugrädern vorgesehen, vielmehr sind die gelenkten Fahrzeugräder und die Lenkhandhabe lediglich über eine Regelstrecke miteinander wirkungsmäßig gekoppelt. Ein Handkraftsteller dient dazu, an der Lenkhandhabe bzw. am Lenkhandrad einen Lenkwiderstand zu erzeugen und die Lenkhandhabe bzw. das Lenkhandrad analog zu von den gelenkten Fahrzeugrädern aufgrund von Störkräften ausgeführten Lenkbewegungen zu verstellen. Der Handkraftsteller bewirkt also eine Rückkopplung der an den gelenkten Fahrzeugrädern wirksamen Lenkkräfte sowie der Lenkbewegungen dieser Räder auf die Lenkhandhabe bzw. das Lenkhandrad.

Für den Fall einer Störung der Regelstrecke bzw. damit zusammenwirkender Systemteile ist ein hydraulisches oder mechanisches Notfallsystem vorgesehen, welches im Störfall automatisch wirksam wird, mit der Folge, daß zwischen Lenkhandhabe und gelenkten Fahrzeugrädern eine hydraulische oder - wie bei bisherigen Lenkungen - mechanische Zwangskopplung vorliegt.

Aufgabe der Erfindung ist es nun, eine vorteilhafte Konstruktion für ein axial verstellbares Lenkhandrad bei einer Lenkung der eingangs angegebenen Art zu schaffen.

Diese Aufgabe wird erfindungsgemäß dadurch gelöst, daß der Handkraftsteller mit dem Lenkhandrad über ein axial stationäres Wellenteil antriebsverbunden ist, welches axial verschiebbar und drehfest mit einem weiteren Wellenteil verbunden ist, das in einem Mantelrohr an dessen lenkhandradseitigem Ende axial und radial gelagert ist, und daß das Mantelrohr in einem relativ stationären Gehäuseteil axial verstellbar geführt und durch Federklemmung spielfrei gehaltert ist.

Die Erfindung beruht auf dem allgemeinen Gedanken, für einen die Axialverstellung des Lenkhandrades erlaubenden, axial verstellbaren Wellenzug zwischen Lenkhandrad und Handkraftsteller ein zumindest die lenkhandradseitigen Teile des Wellenzuges aufnehmendes Gehäuse vorzusehen, welches die Axialverstellung des Wellenzuges mitmacht und dabei ein lenkhandradseitiges Teil des Wellenzuges immer in gleichbleibendem Abstand vom Lenkhandrad axial und radial lagert, wobei diese Lagerung eine hohe Festigkeit gegenüber Vibrationen aufweist, weil die gegeneinander verstellbaren Gehäuseteile durch Federklemmung relativ zueinander spielfrei gehaltert sind.

Mit der Erfindung wird der Tatsache Rechnung getragen, daß einerseits aus Gründen des Komforts eine axiale Verstellbarkeit des Lenkhandrades erwünscht ist und andererseits bei einem Lenksystem der eingangs angegebenen Art Schwingungen bzw. Vibrationen des Lenkhandrades mit besonders hoher Sicherheit vermieden werden müssen, da diese Schwingungen und Vibrationen zu entsprechenden Schwankungen der Lenkwinkel-Sollwertsignale des vom Lenkhandrad betätigten LenkwinkelSollwertgebers führen können. Damit wäre dann eine entsprechende Ansteuerung des Lenkstellaggregates verbunden, mit der Folge, daß das Lenkstellaggregat den ständigen Veränderungen des Lenkwinkel-Sollwertes zu folgen sucht und die Vibrationen bzw. Schwingungen des Lenkhandrades sogar noch verstärken kann. Dies wird bei der Erfindung vermieden.

Gemäß einer bevorzugten Ausführungsform der Erfindung ist vorgesehen, daß das Gehäuse ein gehäusefestes Führungsrohr für das Mantelrohr und das Führungsrohr voneinander axial beabstandete Radialausnehmungen für gefederte Druckkörper aufweist, die das Mantelrohr im Führungsrohr radial verklemmen.

Dabei sind in besonders zweckmäßiger Ausgestaltung der Erfindung vorzugsweise zwei voneinander axial beabstandete, in Umfangsrichtung des Führungsrohres zueinander versetzte, insbesondere einander in Achsansicht des Führungsrohres diametral gegenüberliegende Druckkörper und Ausnehmungen vorgesehen.

Diese Konstruktion gewährleistet auch bei größeren Fertigungstoleranzen eine außerordentlich feste Verbindung zwischen Führungs- und Mantelrohr; hierzu müssen lediglich die Federkräfte für die Druckkörper hinreichend stark bemessen sein. Insbesondere ist vorteilhaft, daß durch die vorgenannte Anordnung der Druckkörper auch Taumelbewegungen des Mantelrohres im Führungsrohr sicher unterbunden werden.

Des weiteren ist vorteilhaft, wenn der Handkraftsteller mit dem Lenkhandrad über einen Drehstab verbunden ist, der ein axial stationäres erstes Wellenteil mit einem axial stationären zweiten Wellenteil verbindet, das axial verschiebbar und drehfest mit dem weiteren Wellenteil verbunden ist, wobei das zweite Wellenteil rohrförmig ausgebildet und der Drehstab im wesentlichen innerhalb dieses Wellenteiles angeordnet ist, und wobei das dem ersten Wellenteil zugewandte Ende des zweiten Wellenteiles auf dem mit dem ersten Wellenteil verbundenen einen Endstück des Drehstabes radial gelagert und das andere Ende des zweiten Wellenteiles drehfest bzw. fest mit dem anderen Endstück des Drehstabes verbunden ist.

Hier dient der Drehstab auch dazu, die einander zugewandten Enden der ersten und zweiten Wellenteile relativ zueinander radial unbeweglich zu verbinden, wobei gegebenenfalls das erste Wellenteil zusätzlich an einem stationären Gehäuse radial gelagert sein kann.

Im übrigen wird hinsichtlich bevorzugter der Erfindung auf die Ansprüche sowie die nachfolgende Erläuterung der Zeichnung verwiesen, anhand der besonders bevorzugte Ausführungsvarianten der Erfindung beschrieben werden.

Dabei zeigt
- Fig. 1: eine schaltplanartige, vereinfachte Darstellung des Lenksystems, und
- Fig. 2: einen Axialschnitt einer axial verstellbaren Lenkwelle.

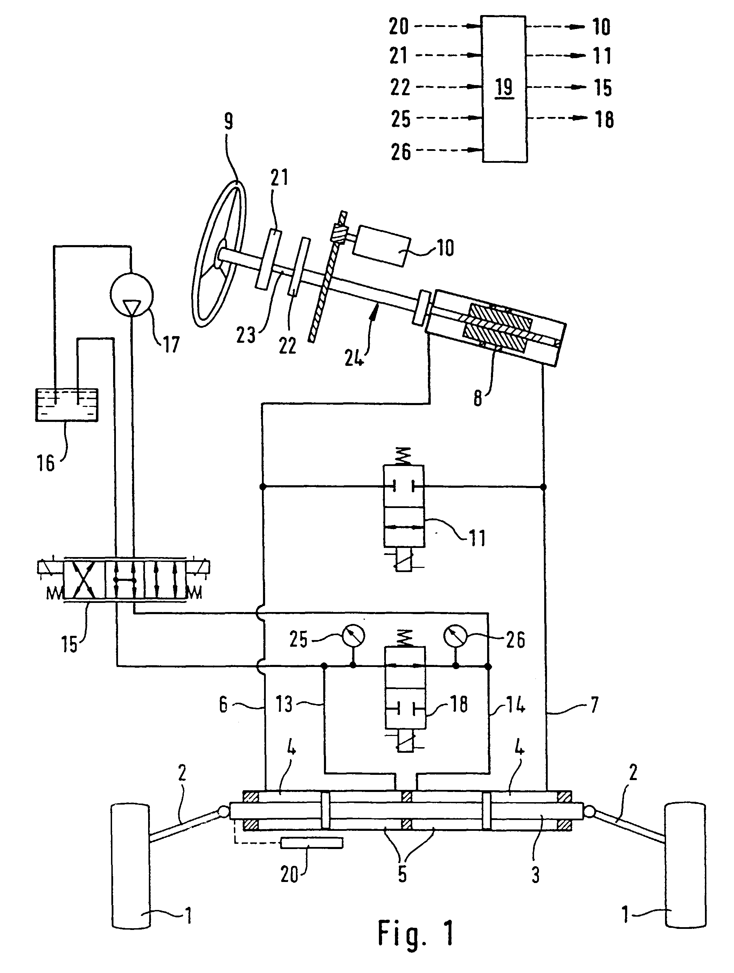

Gemäß Fig. 1 besitzt ein nicht näher dargestelltes Kraftfahrzeug lenkbare Vorderräder 1, die über Spurstangen 2 sowie eine Stange 3 miteinander lenkverstellbar gekoppelt sind.

Die Stange 3 bildet die Kolbenstange von zwei parallel zueinander angeordneten Kolben-Zylinder-Aggregaten 4 und 5, die jeweils als doppeltwirkendes Aggregat ausgebildet sind, wobei die beiden Kammern des Kolben-Zylinder-Aggregates 4 beidseitig der dazwischen angeordneten Kammern des Kolben-Zylinder-Aggregates 5 angeordnet sind.

Das Kolben-Zylinder-Aggregat 4 ist über zwei Hydraulikleitungen 6 und 7 mit den beiden Kolbenarbeitsräumen eines doppeltwirkenden Kolben-Zylinder-Aggregates 8 gekoppelt, dessen Kolben mechanisch mit einem Lenkhandrad 9 antriebsverbunden ist. Der Kolben des Aggregates 8 verschiebt sich also in Fig. 1 nach rechts bzw. links, wenn das Lenkhandrad 9 im Uhrzeigersinn bzw. in Gegenrichtung gedreht wird. Bei Verschiebung des Kolbens des Aggregates 8 wird das Lenkhandrad 9 entsprechend gedreht.

Im übrigen ist das Lenkhandrad 9 mit einem selbsthemmungsfreien Elektromotor 10 antriebsmäßig verbunden, welcher bei festgehaltener Motorwelle als reiner Krafterzeuger zu arbeiten vermag und dessen Zweck weiter unten erläutert wird.

Zwischen den Hydraulikleitungen 6 und 7 ist eine normal geschlossene Absperrventilanordnung 11 angeordnet, welche sich durch Bestromung ihres Stellmagnetes gegen die Kraft einer Rückstellfederung in ihre Offenstellung schalten läßt. Sobald die Bestromung des Stellmagnetes abgeschaltet wird, wird die Absperrventilanordnung 11 durch ihre Rückstellfederung wiederum in die dargestellte Schließlage gebracht und in dieser gehalten.

Das Kolben-Zylinder-Aggregat 5 ist über Hydraulikleitungen 13 und 14 mit zwei Anschlüssen eines Steuerventiles 15 verbunden, welches über zwei weitere Anschlüsse mit einem relativ drucklosen Hydraulikreservoir 16 und einer hydraulischen Druckquelle, im dargestellten Beispiel eine saugseitig an das Hydraulikreservoir 16 angeschlossene Pumpe 17, verbunden ist. Die Pumpe 17 wird von einem nicht dargestellten Elektromotor und/oder dem ebenfalls nicht dargestellten Motor des Kraftfahrzeuges angetrieben.

Zwischen den Hydraulikleitungen 13 und 14 ist ein normal offenes Absperrventil 18 angeordnet, welches durch elektrische Bestromung seines Stellmagnetes gegen die Kraft einer Rückstellfederung aus der dargestellten Offenlage in seine Schließlage gebracht bzw. in dieser Schließlage gehalten werden kann.

Eine elektronische Regel- und Steueranordnung 19 ist eingangsseitig mit einem Geber 20 für den Istwert des Lenkwinkels der Vorderräder 1 verbunden. Dieser Geber 20 kann beispielsweise mit der Stange 3 zusammenwirken, die bei der Lenkverstellung der Räder 1 einen zum Istwert des Lenkwinkels analogen Stellhub ausführt.

Außerdem ist die Eingangsseite der Regel- und Steueranordnung 19 mit einem vom Lenkhandrad 9 betätigten Geber 21 für den Sollwert des Lenkwinkels verbunden. Dieser Sollwertgeber 21 arbeitet im Prinzip als Drehwinkelgeber, d.h. seine Signale sind mit der jeweiligen Drehstellung des Lenkhandrades 9 bzw. des Lenkwellenteiles zwischen Lenkhandrad 9 und Sollwertgeber 21 korreliert.

Des weiteren ist die Regel- und Steueranordnung 19 mit einem Drehwinkelgeber 22 verbunden, der mit dem Sollwertgeber 21 drehelastisch über einen Drehstab 23 antriebsverbunden ist. Dieser Drehstab 23 bildet also einen drehelastischen Teil der im übrigen torsionsfesten Lenkwellenanordnung 24.

Aus den Signalen von Sollwertgeber 21 und Drehwinkelgeber 22 läßt sich die relative Verdrehung zwischen Sollwertgeber 21 und Drehwinkelgeber 22 und damit das Maß der Tordierung des Drehstabes 23 ermitteln. Dies ist gleichbedeutend damit, daß die Regel- und Steueranordnung 19 aus den Signalen der Geber 21 und 22 die am Lenkhandrad 9 vorliegende Handkraft erfassen kann.

Das Lenksystem der Fig. 1 funktioniert im Normalfall wie folgt:

Bei normalem Betrieb werden die Absperrventilanordnung 11 sowie das Absperrventil 18 von der Regel- und Anordnung 19 durch Bestromung der zugeordneten Stellmagnete in die nicht dargestellten Lagen gebracht und in diesen Lagen gehalten. Dementsprechend ist das Kolben-Zylinder-Aggregat 4 vom Kolben-Zylinder-Aggregat 8 sowie vom Lenkhandrad 9 hydraulisch entkoppelt.

Zwischen den beiden Kolbenarbeitsräumen des Kolben-Zylinder-Aggregates 5 wird durch Betätigung des Steuerventiles 15 eine Druckdifferenz in folgender Weise gesteuert:

Die Regel- und Steueranordnung 19 erfaßt über den Geber 20 den Istwert des Lenkwinkels der Vorderräder 1. Über den vom Lenkhandrad betätigten Geber 21 wird der Sollwert des Lenkwinkels vorgegeben. Entsprechend einem von der Regel- und Steueranordnung 19 ausgeführten Soll-Istwert-Vergleich werden dann die Stellmagnete des Steuerventiles 15 gesteuert. Wenn keine Soll-Istwert-Abweichung vorhanden ist, bleibt das Steuerventil 15 in der dargestellten Mittellage, in der das Kolben-Zylinder-Aggregat 5 hydraulisch auf Freilauf geschaltet und mit dem Reservoir 16 verbunden ist. Falls eine Soll-Istwert-Abweichung auftritt, wird das Steuerventil 15 aus der dargestellten Mittellage je nach Richtungssinn der Soll-Istwert-Abweichung nach rechts oder links verschoben, so daß jeweils ein Kolbenarbeitsraum des Kolben-Zylinder-Aggregates 5 mit dem Druckanschluß des Steuerventiles 15 und der andere Kolbenarbeitsraum des Aggregates 5 mit dem Reservoir 16 steuerbar verbunden und damit am Kolben-Zylinder-Aggregat 5 eine steuerbare Druckdifferenz wirksam wird, mit der Folge, daß das Kolben-Zylinder-Aggregat 5 eine Stellkraft in einer von der Richtung der Soll-Istwert-Abweichung des Lenkwinkels vorgegebenen Richtung erzeugt. Auf diese Weise wird eine Soll-Istwert-Abweichung des Lenkwinkels kurzfristig ausgeregelt, und die Vorderräder 1 folgen der Lenkverstellung des Lenkhandrades 9.

Aus Signalen von Drucksensoren 25 und 26, die Drücke der Leitungen 13 und 14 erfassen, und/oder aus den elektrischen Spannungen und Stromstärken an den Stellmagneten des Steuerventiles 15 kann die Regler- und Steueranordnung 19 die am Kolben-Zylinder-Aggregat 5 wirksame Druckdifferenz direkt oder indirekt ermitteln. Das Maß dieser Druckdifferenz ist mit den zwischen den lenkbaren Vorderrädern 1 und dem Kolben-Zylinder-Aggregat 5 übertragenen Kräften bzw. Momenten korreliert. In Korrelation zu diesen Kräften und Momenten wird von der Regel- und Steueranordnung 19 ein Sollwert für eine am Lenkhandrad 9 fühlbare Handkraft bestimmt und durch entsprechende Ansteuerung des Elektromotors 10 eingestellt, wobei der Istwert der Handkräfte aus den Signalen der Geber 21 und 22 ermittelt wird. Im Ergebnis wird also der Motor 10 in Abhängigkeit von einem Soll-Istwert-Vergleich für die Handkräfte geregelt. Auf diese Weise erhält der Fahrer am Lenkhandrad 9 eine haptische Rückkopplung der zwischen den gelenkten Fahrzeugrädern 1 und dem Kolben-Zylinder-Aggregrat 5 wirksamen Kräfte. Falls durch diese Kräfte eine Lenkverstellung der lenkbaren Räder 1 verursacht wird, wird durch den Elektromotor 10 das Lenkhandrad 9 in entsprechender Weise verstellt.

Die Regel- und Steueranordnung 19 überwacht sich ständig auf korrekte Funktion. Falls eine Störung auftritt, arbeitet das System wie folgt:

In einem solchen Falle wird der Stellmagnet der Absperrventilanordnung 11 stromlos geschaltet, mit der Folge, daß die Absperrventilanordnung in die in Fig.1 dargestellte Schließlage umschaltet und die Kolben-Zylinder-Aggregate 4 und 8 und damit die lenkbaren Vorderräder 1 und das Lenkhandrad 9 miteinander hydraulisch zwangsgekoppelt sind.

Soweit eine hinreichende Restfunktion der Regel- und Steueranordnung 19 sowie der damit zusammenwirkenden Sensorik gegeben ist, arbeitet das erfindungsgemäße Lenksystem bei eingeschalteter Zwangskoppplung zwischen Lenkhandrad 9 und gelenkten Vorderrädern 1 nach Art einer herkömmlichen Servolenkung. Dies bedeutet, daß die Regel- und Steueranordnung 19 das Steuerventeil 15 in Abhängigkeit von den zwischen Lenkhandrad 9 und gelenkten Fahrzeugrädern 1 übertragenen Kräften und Momenten steuert, derart, daß das Kolben-Zylinder-Aggregat 5 eine die am Lenkhandrad 9 aufzubringende Handkraft vermindernde Servokraft erzeugt. Dabei können die zwischen dem Lenkhandrad 9 und den gelenkten Fahrzeugrädern 1 übertragenen Kräfte und Momente aus den Signalen der Geber 21 und 22 ermittelt werden, die die durch die vorgenannten Kräfte und Momente bewirkte Tordierung des Drehstabes 23 erfassen.

Sollte ein Notbetrieb analog einer herkömmlichen Servolenkung nicht möglich sein, wird die Bestromung des Elektromagnetes des Absperrventiles 18 abgeschaltet, so daß das Absperrventil 18 seine in Fig. 1 dargestellte Offenlage einnimmt und das Kolben-Zylinder-Aggregat 5 unabhängig von der Stellung des Steuerventiles 15 hydraulisch auf Freilauf geschaltet ist.

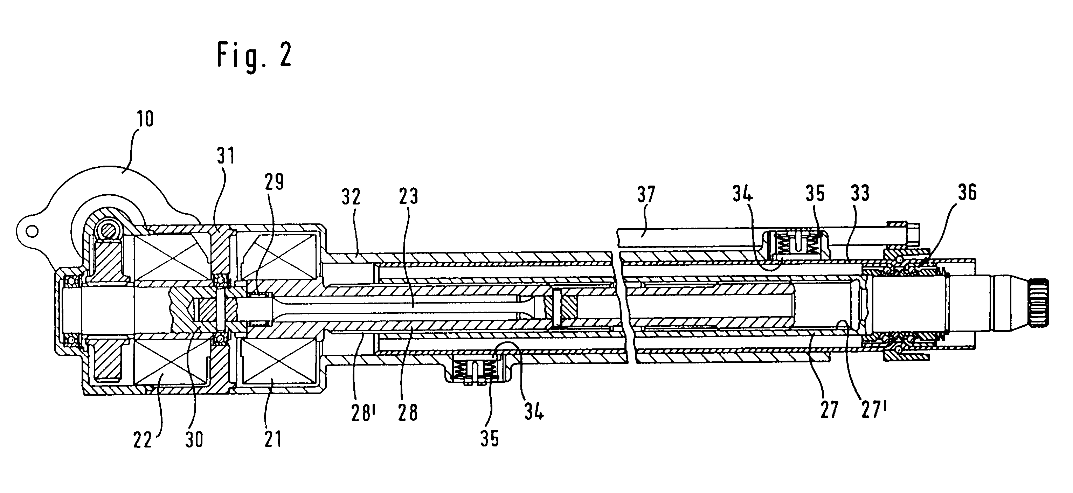

Gemäß Fig. 2 besitzt die Lenkwellenanordnung 24 ein erstes Lenkwellenteil 27, dessen in Fig. 2 rechtes Ende das in Fig. 2 nicht dargestellte Lenkhandrad 9 trägt bzw. damit verbunden ist. Das Lenkwellenteil 27 ist als Hohlwelle ausgebildet und mit einer axialen Innenverzahnung 27' versehen, in der ein zweites Lenkwellenteil 28 mit einer passenden axialen Außenverzahnung 28' axial verschiebbar angeordnet ist.

Das Lenkwellenteil 28 ist ebenfalls als Hohlwelle ausgebildet und nimmt in seinem Innenraum den Drehstab 23 auf, welcher mit seinem in Fig. 2 rechten Endstück drehfest in einem Mittelbereich des Lenkwellenteiles 28 gehaltert ist.

Das in Fig. 2 linke Ende des Drehstabes 23 ist innerhalb des linken Endes des zweiten Wellenteiles 28 mittels eines Nadellagers 29 radial gelagert. Ein aus dem linken Ende des zweiten Wellenteiles 28 herausstehender Endabschnitt des Drehstabes 23 ist fest mit einem dritten Wellenteil 30 verbunden, wobei diese Verbindung in gleicher Weise wie die Verbindung zwischen Drehstab und zweitem Wellenteil 28 ausgebildet sein kann. Dabei wird aufgrund der radialen Lagerung des Drehstabes 23 im linken Ende des zweiten Wellenteiles 28 sowie eines radial festen Lagers zwischen dem Wellenteil 30 und einem stationären Gehäuseteil 31 gewährleistet, daß die Wellenteile 28 und 30 relativ zueinander radial unbeweglich sind.

Auf dem Außenumfang des linken Endes des zweiten Wellenteiles 28 ist ein sich zusammen mit dem Wellenteil 28 drehender Teil des Lenkwinkelsollwertgebers 21 drehfest angeordnet. Das zugewandte Ende des dritten Wellenteiles 30 trägt in entsprechender Weise den zusammen mit dem Wellenteil 30 drehbaren Teil des Drehwinkelgebers 22.

Die Geber 21 und 22 sind gemeinsam im Gehäuse 31 untergebracht, welches sich in Fig. 2 nach rechts in ein Führungsrohr 32 fortsetzt. Dieses Führungsrohr 32 nimmt ein Mantelrohr 33 axial verschiebbar auf. Dieses wird innerhalb des Führungsrohres 32 durch zwei Druckkörper 34 festgehalten, die in radialen Buchsenteilen des Führungsrohres 32 verschiebbar geführt sind und durch Tellerfederpakete 35 gegen die Außenumfangswandung des Mantelrohres 33 gepreßt werden. In Achsrichtung des Führungsrohres 32 sind die Druckkörper 34 weit voneinander beabstandet. In Achsansicht des Führungsrohres 32 liegen sich die Druckkörper 34 diametral gegenüber. Gegebenenfalls können die Druckkörper 34 in Umfangsrichtung des Führungsrohres 32 auch so gegeneinander versetzt angeordnet sein, daß jeder Druckkörper mit seiner Zentralachse in einer gesonderten Axialebene des Führungsrohres 32 liegt.

Aufgrund dieser Anordnung der Druckkörper 34 wird auch bei größeren Fertigungstoleranzen, d.h. wenn der Innendurchmesser des Führungsrohres 32 ein größeres Übermaß relativ zum Außendurchmesser des Mantelrohres 33 besitzt, eine besonders feste Halterung des Mantelrohres 33 gewährleistet.

Innerhalb des rechten Endes des Mantelrohres 33 ist das erste Wellenteil 27 axial und radial fest gelagert, beispielsweise mittels Rillenkugellager 36.

Zwischen dem Führungsrohr 32 und dem Mantelrohr 33 ist ein nicht näher dargestellter Verstellantrieb vorgesehen, durch den sich das Mantelrohr 33 relativ zum Führungsrohr 32 unter Überwindung der durch die Druckkörper 34 bewirkten Haltekräfte axial verschieben läßt. Dieser Verstellantrieb verschiebt eine Stange 37, deren in Fig. 2 rechtes Ende an einer mit dem Mantelrohr 33 fest verbundenen Hülse befestigt ist.

## Patentansprüche

1. Lenksystem für Kraftfahrzeuge mit
- einem fahrerseitig betätigbaren Lenkhandrad,
- einem Lenkstellaggregat zur motorischen Lenkverstellung gelenkter Fahrzeugräder,
- einem vom Lenkhandrad betätigten Lenkwinkel-Sollwertgeber,
- einem mit den gelenkten Fahrzeugrädern betätigten Lenkwinkel-Istwertgeber,
- einer Regelstrecke, die das Lenkstellaggregat in Abhängigkeit von einem Soll-Istwert-Vergleich des Lenkwinkels betätigt,
- einem Handkraftsteller, der in Korrelation zu Kräften, die zwischen den gelenkten Fahrzeugrädern und dem Lenkstellaggregat auftreten, an der Lenkhandhabe eine Rückwirkungskraft sowie einen mit Lenkwinkeländerungen der gelenkten Fahrzeugräder korrelierten Stellhub der Lenkhandhabe bewirkt,
**dadurch gekennzeichnet,**
daß der Handkraftsteller (10) mit dem Lenkhandrad (9) über ein axial stationäres Wellenteil (28) antriebsverbunden ist, welches axial verschiebbar und drehfest mit einem weiteren Wellenteil (27) verbunden ist, das in einem Mantelrohr (33) an dessen lenkhandradseitigem Ende axial und radial gelagert ist, und
daß das Mantelrohr (33) in einem relativ stationären Gehäuseteil (32) axial verstellbar geführt und durch Federklemmung (34,35) spielfrei gehaltert ist.

2. Lenksystem nach Anspruch 1,
**dadurch gekennzeichnet,**
daß das Gehäuse (31) axial feststehend in einer Konsole bzw. einem Instrumententräger des Fahrzeuges angeordnet ist.

3. Lenksystem nach Anspruch 1 oder 2,
**dadurch gekennzeichnet,**
daß das Gehäuse (31) ein gehäusefestes Führungsrohr (32) für das Mantelrohr (33) aufweist.

4. Lenksystem nach Anspruch 3,
**dadurch gekennzeichnet,**
daß das Führungsrohr (32) voneinander axial beabstandete Radialausnehmungen für gefederte Druckkörper (34) aufweist, die das Mantelrohr (33) im Führungsrohr (32) radial verklemmen.

5. Lenksystem nach Anspruch 4,
**dadurch gekennzeichnet,**
daß zwei voneinander axial beabstandete, in Umfangsrichtung des Führungsrohres (32) zueinander versetzte Druckkörper (34) bzw. Ausnehmungen vorgesehen sind.

6. Lenksystem nach Anspruch 5,
**dadurch gekennzeichnet,**
daß die Druckkörper (34) bzw. Ausnehmungen einander diametral gegenüberliegen.

7. Lenksystem nach einem der Ansprüche 1 bis 6,
**dadurch gekennzeichnet,**
daß der Handkraftsteller (10) mit dem Lenkhandrad (9) über einen Drehstab (23) drehelastisch verbunden ist, der ein axial stationäres erstes Wellenteil (30) mit einem axial stationären zweiten Wellenteil (28) verbindet, das axial verschiebbar und drehfest mit dem weiteren Wellenteil (27) verbunden ist, und
daß das zweite Wellenteil (28) rohrförmig ausgebildet und der Drehstab (23) im wesentlichen innerhalb dieses Wellenteiles (28) angeordnet ist, wobei das dem ersten Wellenteil (30) zugewandte Ende des zweiten Wellenteiles (28) auf dem mit dem ersten Wellenteil (30) verbundenen einen Endstück des Drehstabes (23) radial gelagert (Lager 29) und das andere Ende des zweiten Wellenteiles (28) drehfest bzw. fest mit dem anderen Endstück des Drehstabes (23) verbunden ist.

8. Lenksystem nach Anspruch 7,
**dadurch gekennzeichnet,**
daß das dem ersten Wellenteil (30) zugewandte Ende des zweiten Wellenteiles (28) einen ersten Winkelsensor (21) und das zugewandte Ende des ersten Wellenteiles (30) einen zweiten Winkelsensor (22) trägt.

9. Lenksystem nach einem der Ansprüche 7 und 8,
**dadurch gekennzeichnet,**
daß die Signale des ersten Winkelsensors (21) zur Vorgabe eines Lenkwinkel-Sollwertes sowie zusammen mit den Signalen des zweiten Winkelsensors (22) zur Erfassung der vom Handkraftsteller (10) erzeugten Handkraft ausgewertet werden.

10. Lenksystem nach einem der Ansprüche 7 bis 9,
**dadurch gekennzeichnet,**
daß zwischen dem ersten und dem zweiten Wellenteil (30,28) eine Drehschwingungsdämpfung wirksam bzw. vorgesehen ist.

11. Lenksystem nach einem der Ansprüche 7 bis 10,
**dadurch gekennzeichnet,**
daß das erste Wellenteil (30) nahe des radialen Lagers (29) des dem ersten Wellenteil (30) zugewandten Ende des zweiten Wellenteiles (28) und/oder axial zwischen erstem und zweitem Winkelsensor (21,22) am stationären Gehäuseteil (32) radial gelagert ist.
